# EUROPEAN PATENT APPLICATION

(11) **EP 4 702 829 A1**
(43) Date of publication of application: **04.03.2026**
(21) Application number: 25194484.9
(22) Date of filing: 07.08.2025
(51) Int. Cl.: A01D 34/416

(54) **STRING TRIMMER**

(30) Priority: 30.08.2024 CN 202411217429; 30.08.2024 CN 202411209938
(71) Applicant: Nanjing Chervon Industry Co., Ltd., Nanjing, Jiangsu 211106 (CN)
(72) Inventor: GUO, Jianpeng, Nanjing, Jiangsu 211106 (CN); YIN, Yiqiang, Nanjing, Jiangsu 211106 (CN)
(74) Representative: Sun, Yiming

(57) **Abstract**

A string trimmer including a string trimmer head including a spool and a head housing. The string trimmer has a first cutting mode and a second cutting mode; in the first cutting mode, the string trimmer head rotates along a first direction to cut vegetation; in the second cutting mode, the string trimmer head rotates along a second direction to cut vegetation; and the first direction is opposite to the second direction. In the first cutting mode, a drive shaft drives the spool to rotate, and the spool drives the head housing to rotate; and in the second cutting mode, the drive shaft drives the head housing to rotate, and the head housing drives the spool to rotate.

## Description

### TECHNICAL FIELD

The present application relates to outdoor garden power tools, for example, a string trimmer.

### BACKGROUND

A string trimmer is a garden tool for trimming lawns. The string trimmer includes a string trimmer head. The string trimmer head rotates at a high speed to drive a string trimmer line mounted on the string trimmer head to rotate to implement a cutting function.

During cutting, the string trimmer line is gradually consumed due to wear. When the string trimmer line wound on a spool is sufficient but a portion exposed out of a head housing is insufficient to cut vegetation, a portion of the string trimmer line wound on the spool needs to be released to the outside of the head housing. When the string trimmer line wound on the spool is insufficient, a user needs to replace the string trimmer line with a new one and wind the new string trimmer line onto the spool.

In the related art, the string trimmer can perform cutting in only one rotation direction of a drive shaft, that is, the string trimmer line can perform cutting in only one rotation direction, and the direction is set before the string trimmer leaves a factory and cannot be selected by the user.

This part provides background information related to the present application, and the background information is not necessarily the existing art.

### SUMMARY

An example provides a string trimmer. The string trimmer includes: a string trimmer head including a spool and a head housing, where the spool is configured for a string trimmer line to be wound on, and the head housing is configured to accommodate at least part of the spool and formed with a threading hole for the string trimmer line to penetrate through; and a drive device including a motor having a drive shaft, where the drive device is configured to drive the string trimmer head to rotate to cut vegetation. The string trimmer has a first cutting mode and a second cutting mode; in the first cutting mode, the string trimmer head rotates along a first direction to cut vegetation; in the second cutting mode, the string trimmer head rotates along a second direction to cut vegetation; and the first direction is opposite to the second direction. In the first cutting mode, the drive shaft drives the spool to rotate, and the spool drives the head housing to rotate; and in the second cutting mode, the drive shaft drives the head housing to rotate, and the head housing drives the spool to rotate.

In some examples, the spool is formed with or connected to a first drive portion, and the head housing is formed with or connected to a first mating portion; when the string trimmer head rotates along the first direction, the first drive portion drives the first mating portion; and when the string trimmer head rotates along the second direction, the first mating portion drives the first drive portion.

In some examples, the first drive portion includes first meshing teeth each having a first drive surface, and the first mating portion includes first mating teeth each having a first mating surface.

In some examples, when the string trimmer head rotates along the first direction, the first drive surface drives the first mating surface; and when the string trimmer head rotates along the second direction, the first mating surface drives the first drive surface.

In some examples, the first drive surface and the first mating surface are configured for vertical surface engagement.

In some examples, when the head housing is at a first axial position relative to the spool, the first mating teeth mate with the first meshing teeth to enable the rotating spool to drive the head housing to rotate synchronously.

In some examples, when the head housing is at a second axial position relative to the spool, the first mating teeth are displaced axially relative to the first meshing teeth to enable the spool to rotate relative to the head housing and release the string trimmer line.

In some examples, a clutch mechanism driven by the drive shaft is further included, where the clutch mechanism is configured to selectively transmit power output from the drive shaft to at least one of the spool or the head housing according to a rotational state of the drive shaft.

In some examples, a mode selection assembly is further included, which is configured for a user to operate to select a rotation direction of the string trimmer head.

An example provides a string trimmer. The string trimmer includes: a string trimmer head including a spool and a head housing, where the spool is configured for a string trimmer line to be wound on, and the head housing is configured to accommodate at least part of the spool and formed with a threading hole for the string trimmer line to penetrate through; and a drive device including a motor having a drive shaft, where the drive device is configured to drive the string trimmer head to rotate to cut vegetation. The string trimmer has a first cutting mode and a second cutting mode; in the first cutting mode, the string trimmer head rotates along a first direction to cut vegetation; in the second cutting mode, the string trimmer head rotates along a second direction to cut vegetation; and the first direction is opposite to the second direction. The string trimmer further includes a clutch mechanism driven by the drive shaft, and the clutch mechanism is configured to transmit power output from the drive shaft to the spool or the head housing according to a rotation direction of the drive shaft.

In some examples, the clutch mechanism includes a first portion and a second portion, the first portion is disposed between the drive shaft and the spool and configured to transmit the power output from the drive shaft to the spool to enable the string trimmer head to rotate along the first direction, and the second portion is disposed between the drive shaft and the head housing and configured to transmit the power output from the drive shaft to the head housing to enable the string trimmer head to rotate along the second direction.

In some examples, the first portion includes a first inner ratchet tooth, and the drive shaft includes first outer ratchet teeth; and when the motor rotates along the first direction, one of the first outer ratchet teeth is engaged with the first inner ratchet tooth to drive the string trimmer head to rotate along the first direction.

In some examples, the second portion includes a second inner ratchet tooth, and the drive shaft includes second outer ratchet teeth; and when the motor rotates along the second direction, one of the second outer ratchet teeth is engaged with the second inner ratchet tooth to drive the string trimmer head to rotate along the second direction.

In some examples, the first portion and the second portion are disposed separately.

In some examples, the first portion and the second portion are each configured to be an eccentric structure.

In some examples, the first portion and the second portion are respectively connected to a biasing element.

An example provides a string trimmer. The string trimmer includes: a string trimmer head including a spool and a head housing, where the spool is configured for a string trimmer line to be wound on, and the head housing is configured to accommodate at least part of the spool and formed with a threading hole for the string trimmer line to penetrate through; a drive device including a motor and configured to drive the string trimmer head to operate; and an operating device configured for a user to operate to control the string trimmer. The string trimmer has a first cutting mode and a second cutting mode; in the first cutting mode, the string trimmer head rotates along a first direction to cut vegetation; in the second cutting mode, the string trimmer head rotates along a second direction to cut vegetation; the first direction is opposite to the second direction; and the string trimmer further has a winding mode, and when the string trimmer is operating in the winding mode, the motor is further configured to drive one of the spool or the head housing to rotate to wind the string trimmer line onto the spool.

In some examples, the operating device includes a mode selection assembly configured for the user to select one of the first cutting mode, the second cutting mode, or the winding mode of the string trimmer.

In some examples, the string trimmer is configured to, upon power-on, select by default a cutting mode at the time of a last shutdown to operate.

In some examples, the rated rotational speed of the motor in the winding mode is lower than the rated rotational speed of the motor in the second cutting mode.

An example provides a string trimmer. The string trimmer includes: a string trimmer head including a spool and a head housing, where the spool is configured for a string trimmer line to be wound on, and the head housing is configured to accommodate at least part of the spool and formed with a threading hole for the string trimmer line to penetrate through; and a drive device including a motor having a drive shaft, where the drive device is configured to drive the string trimmer head to rotate to cut vegetation. The string trimmer has a first cutting mode and a second cutting mode; in the first cutting mode, the string trimmer head rotates along a first direction to cut vegetation; in the second cutting mode, the string trimmer head rotates along a second direction to cut vegetation; and the first direction is opposite to the second direction. The spool is formed with or connected to a first drive portion, and the first drive portion includes a first drive surface; and the head housing is formed with or connected to a first mating portion, and the first mating portion includes a first mating surface. In the first cutting mode, the first drive surface drives the first mating surface to rotate so that the spool and the head housing rotate synchronously; in the second cutting mode, the first mating surface drives the first drive surface to rotate so that the spool and the head housing rotate synchronously; and when the string trimmer head receives a line releasing instruction in the first cutting mode and the second cutting mode, the first drive surface is displaced axially relative to the first mating surface to enable the spool to rotate relative to the head housing, releasing the string trimmer line from the spool.

In some examples, the line releasing instruction includes knocking the string trimmer head.

In some examples, the head housing has a first axial position before the line releasing instruction is received and a second axial position after the line releasing instruction is received.

In some examples, when the head housing is at the first axial position relative to the spool, the first drive portion mates with the first mating portion to enable the spool and the head housing to rotate synchronously.

In some examples, when the head housing is at the second axial position relative to the spool, the first mating portion is displaced axially relative to the first drive portion.

In some examples, in the first cutting mode, when the head housing is at the second axial position relative to the spool, the drive shaft drives the spool to rotate synchronously, and a rotational speed of the spool is higher than a rotational speed of the head housing.

In some examples, in the second cutting mode, when the head housing is at the second axial position relative to the spool, the drive shaft drives the head housing to rotate synchronously, and a rotational speed of the head housing is higher than a rotational speed of the spool.

In some examples, the first drive surface and the first mating surface are configured for vertical surface engagement.

In some examples, a clutch mechanism driven by the drive shaft is further included, where the clutch mechanism is configured to selectively transmit power output from the drive shaft to the spool or the head housing according to a rotation direction of the drive shaft.

In some examples, the clutch mechanism includes a first portion and a second portion, the first portion is disposed between the drive shaft and the spool and configured to transmit the power output from the drive shaft to the spool to enable the string trimmer head to rotate along the first direction, and the second portion is disposed between the drive shaft and the head housing and configured to transmit the power output from the drive shaft to the head housing to enable the string trimmer head to rotate along the second direction.

### BRIEF DESCRIPTION OF DRAWINGS

FIG. 1 is a structural view of a string trimmer as an example of the present application.
FIG. 2 is a schematic view of a string trimmer head and a drive device of a string trimmer as an example of the present application.
FIG. 3 is a schematic view of the internal structure of a string trimmer head as an example of the present application.
FIG. 4 is an exploded view of a string trimmer head as an example of the present application.
FIG. 5 is a sectional view of a string trimmer head as an example of the present application.
FIG. 6 is a schematic view of a clutch mechanism as an example of the present application.
FIGS. 7A and 7B are cross-sectional views illustrating a first portion of a clutch mechanism as an example of the present application.
FIGS. 8A and 8B are cross-sectional views illustrating a second portion of a clutch mechanism as an example of the present application.
FIGS. 9A and 9B are cross-sectional views illustrating a third portion of a clutch mechanism as an example of the present application.
FIG. 10 is a schematic view of a spool as an example of the present application.
FIG. 11 is a schematic view of an upper housing of a head housing as an example of the present application.
FIG. 12 is a schematic view of first meshing teeth and a first mating tooth as an example of the present application.
FIG. 13 is a diagram of a control structure as an example of the present application.
FIG. 14 is a schematic view of a clutch mechanism in a first cutting state as an example of the present application.
FIG. 15 is a schematic view of a clutch mechanism in a starting state of rotation in a second direction as an example of the present application.
FIG. 16 is a schematic view of a clutch mechanism in a second cutting state as an example of the present application.
FIG. 17 is a schematic view of a clutch mechanism in a winding mode in a second direction as an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

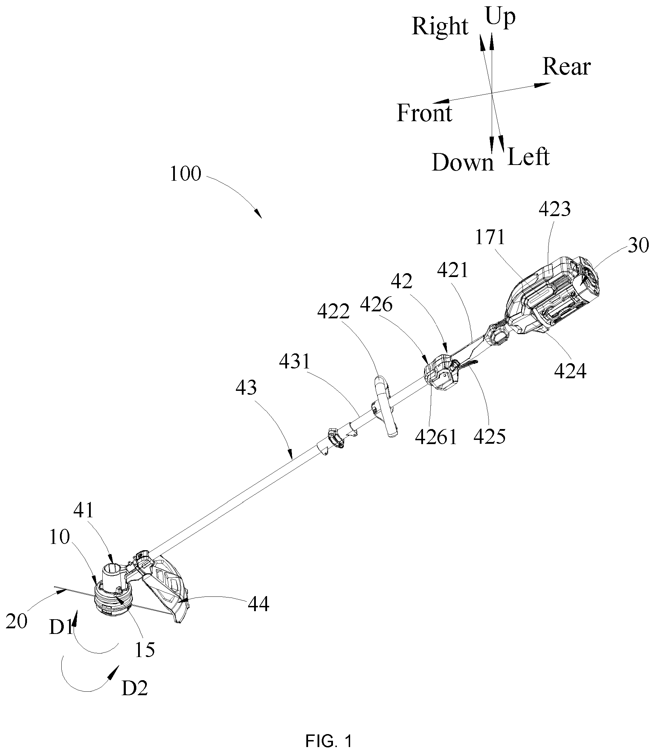

As shown in FIGS. 1 to 3, a string trimmer 100 includes a string trimmer head 10, a drive device 41, an operating device 42, and a connecting device 43.

The string trimmer head 10 is used for mounting and storing a string trimmer line 20. The string trimmer line 20 is partially stored inside the string trimmer head 10 and partially extends out of the string trimmer head 10 to cut vegetation when the string trimmer head 10 rotates.

The drive device 41 provides power to rotate the string trimmer head 10. The drive device 41 includes a motor 411 and a first housing 412, the motor 411 is disposed in the first housing 412 and includes a drive shaft 4111, and the drive shaft 4111 is connected to the string trimmer head 10 to drive the string trimmer head 10 to rotate about a rotation axis 101 to drive the string trimmer line 20 to rotate and cut vegetation. To facilitate the description of technical solutions of the present invention, an upper side and a lower side are defined, as shown in FIG. 1, where the drive device 41 is disposed on the upper side of the string trimmer head 10, and the string trimmer head 10 is disposed on the lower side of the drive device 41. In this example, the motor 411 is specifically an electric motor, and the electric motor 411 is used below instead of the motor, which is not to limit the present application.

The operating device 42 includes a handle 421, an auxiliary handle 422, a main switch 425, and a second housing 423. The handle 421 and the auxiliary handle 422 are held by hands of a user one to one so that the string trimmer 100 can be operated more stably. The main switch 425 may be disposed on the handle 421, and the user can directly operate the main switch 425 when holding the handle 421 to control the string trimmer 100 to trim grass.

The second housing 423 is formed with a coupling portion 424 for coupling a power supply. For example, the coupling portion 424 can couple a battery pack 30 to supply power to the string trimmer 100. In this example, the handle 421 and the second housing 423 are separately formed and provided as two components. It is to be understood that in some other examples, the handle 421 may be integrally formed with the second housing 423.

In this example, the power supply includes the battery pack 30. As an energy source, the battery pack 30 supplies power to at least the motor 411 in the string trimmer 100, and the second housing 423 is detachably adapted to the battery pack 30. The second housing 423 further accommodates a circuit board 171, and the circuit board 171 is electrically connected to the motor 411 to enable the battery pack 30 to power the motor 411 and control the motor 411. In some examples, the nominal voltage of the string trimmer 100 is greater than or equal to 18 V and less than or equal to 56 V. In some examples, the nominal voltage of the string trimmer 100 is greater than 56 V and less than or equal to 120 V. In some examples, the battery pack 30 may be a lithium battery pack, a solid-state battery pack, or a pouch battery pack. The nominal voltage of the battery pack 30 is 18 V, 24 V, 36 V, 48 V, 56 V, 80 V, or 120 V. The nominal voltage typically refers to a voltage specified by a manufacturer or a vendor on the label, package, user manual, specification, advertisement, marketing document, or another support document of the product so that the user knows which power tools can run with the battery pack 30. Alternatively, the nominal voltage of the battery pack 30 may be acquired by being detected or calculated.

The connecting device 43 includes a connecting rod 431 for connecting the first housing 412 to the second housing 423. The operating device 42 is disposed on the connecting rod 431, the auxiliary handle 422 is also mounted to the connecting rod 431, and the auxiliary handle 422 is located between the first housing 412 and the second housing 423.

The string trimmer 100 further includes a shield 44 at least partially distributed around the string trimmer head 10. When the string trimmer head 10 is trimming grass, the shield 44 can prevent grass clippings from flying towards where the user or an operator stands.

The string trimmer head 10 includes a spool 11 and a head housing 12. The string trimmer line 20 is wound on the spool 11, the head housing 12 accommodates at least part of the spool 11, and the spool 11 is at least partially located in the head housing 12. The string trimmer head 10 further includes a fan 14. The fan 14 is provided with fan blades for generating an airflow. The electric motor 411 can drive the fan 14 to rotate to generate the airflow. The head housing 12 includes a lower housing 122, an upper housing 123, and a support plate 124. The lower housing 122 and the upper housing 123 form an accommodation space for accommodating the spool 11, and the lower housing 122 and the upper housing 123 are connected and rotate synchronously. The fan 14 is connected to the support plate 124, and the support plate 124 and the upper housing 123 rotate synchronously.

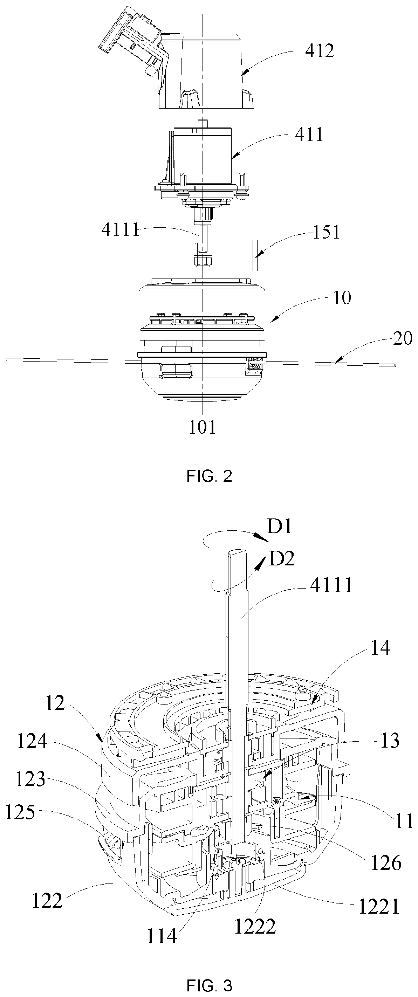

As shown in FIGS. 3 to 5, the spool 11 is formed with a threading hole for the string trimmer line 20 to penetrate through. For example, the spool 11 is provided with an inner threading hole 112 for fixing the string trimmer line 20 or for the string trimmer line 20 to penetrate through, and the head housing 12 (the upper housing 123 and/or the lower housing 122) is formed with an outer threading hole 125 for the string trimmer line 20 to penetrate through. When the user needs to replace the string trimmer line 20 with a new one, the new string trimmer line 20 penetrates through the outer threading hole 125 and then through the inner threading hole 112. At this time, due to the limiting effect of the outer threading hole 125 on the string trimmer line 20, as long as the spool 11 and the head housing 12 can be moved relatively, the string trimmer line 20 is gradually wound onto the spool 11 as the outer threading hole 125 moves relative to the spool 11.

When the string trimmer head 10 is required to rotate to drive the string trimmer line 20 to rotate and cut vegetation, the electric motor 411 drives the spool 11 and the head housing 12 to rotate synchronously, and the string trimmer line 20 and the spool 11 remain relatively fixed. Thus, the electric motor 411 drives the string trimmer head 10 to rotate to drive the string trimmer line 20 to rotate, thereby cutting vegetation.

When the string trimmer line 20 wound on the spool 11 is sufficient but a portion exposed out of the head housing 12 is insufficient to cut vegetation, a portion of the string trimmer line 20 wound on the spool 11 needs to be released to the outside of the head housing 12. This process of releasing a portion of the string trimmer line 20 wound on the spool 11 to the outside of the head housing 12 is defined as a line releasing process. When line releasing is required, the spool 11 and the head housing 12 rotate relatively. In the related art, during the winding and line releasing of the string trimmer head 10, the spool 11 and the head housing 12 are required to rotate relatively. A rotation direction of the spool 11 relative to the head housing 12 during winding is opposite to a rotation direction of the spool 11 relative to the head housing 12 during line releasing.

In this example, the string trimmer 100 has a first cutting mode and a second cutting mode; in the first cutting mode, the string trimmer head 10 rotates about the rotation axis 101 along a first direction D1 and drives the string trimmer line 20 to rotate to cut vegetation; in the second cutting mode, the string trimmer head 10 rotates about the rotation axis 101 along a second direction D2 and drives the string trimmer line 20 to rotate to cut vegetation; where the first direction D1 is opposite to the second direction D2. In this example, when the string trimmer head 10 is viewed from the electric motor 411, the first direction D1 may be considered as a clockwise direction, and correspondingly, the second direction D2 may be considered as a counterclockwise direction, which is of course not limiting. In the first cutting mode, the drive shaft 4111 drives the spool 11 to rotate, and the spool 11 drives the head housing 12 to rotate. In the second cutting mode, the drive shaft 4111 drives the head housing 12 to rotate, and the head housing 12 drives the spool 11 to rotate.

In the related art, no matter whether the string trimmer head of the string trimmer implements manual winding, electric winding, or integrated manual and electric winding, for example, the drive shaft rotates along the first direction D1 to implement a function of cutting vegetation, and the drive shaft rotates along the second direction D2 to wind the string trimmer line 20 onto the spool. For those skilled in the art, when the string trimmer head uses the string trimmer line 20 as a cutting tool, a rotation direction of the drive shaft in a cutting mode is generally a direction in which the string trimmer line 20 is released from the spool, and a direction opposite to the rotation direction of the drive shaft in the cutting mode is a direction in which the string trimmer line 20 is wound onto the spool. In the related art, the string trimmer can perform cutting in only one rotation direction of the drive shaft, that is, the string trimmer line 20 can perform cutting in only one rotation direction, and the direction is set before the string trimmer leaves a factory and cannot be selected by the user. However, during actual use of the string trimmer 100, the applicant has found that different users have different usage habits, for example, different dominant hands and different operation and moving directions, and therefore, the users with different usage habits have different requirements for a rotation direction of the string trimmer line 20 during cutting. Moreover, in different usage scenarios, for example, by the side of a swimming pool, if the string trimmer line 20 has only one rotation direction, the string trimmer cannot be applied to different usage scenarios.

In the string trimmer of the related art, the drive shaft drives any one of the spool or the head housing and has a unique power transmission path. For example, the drive shaft drives the spool 11, and the spool 11 drives the head housing 12 to move. The string trimmer line 20 is wound onto the spool along the first direction D1. When the string trimmer line 20 needs to be released from the spool, that is, during line releasing, the spool is required to move relative to the head housing along the second direction D2. Since the head housing is driven by the spool, can the head housing and the spool move relatively only when a rotational speed of the head housing is lower than a rotational speed of the spool. Therefore, can the line releasing be implemented only when the spool moves along the second direction D2. To ensure the use efficiency and convenience of the user, the line releasing process is performed during cutting and the continuous rotation of the drive shaft and according to a line releasing instruction. Therefore, a rotation direction of the drive shaft in the line releasing process needs to be the same as the rotation direction of the drive shaft in the cutting mode. To ensure that the string trimmer can implement the line releasing without a shutdown in the cutting mode, can the string trimmer perform cutting only when the drive shaft rotates along a direction opposite to a winding direction.

For the string trimmer 100 of the present application, when the string trimmer head 10 is in the first cutting mode, the drive shaft 4111 rotates along the first direction D1, the drive shaft 4111 drives the spool 11 to rotate, the spool 11 drives the head housing 12 to rotate, and the string trimmer head 10 rotates along the first direction D1. Meanwhile, when the string trimmer head 10 is in the second cutting mode, the drive shaft 4111 rotates along the second direction D2, the drive shaft 4111 drives the head housing 12 to rotate, the head housing 12 drives the spool 11 to rotate, and the string trimmer head 10 rotates along the second direction D2. The power transmission path of the drive shaft 4111 is switched and different power transmission paths are used so that regardless of the direction in which the string trimmer line 20 is wound onto the spool 11, the string trimmer head 10 can perform cutting in two different directions. When the string trimmer head 10 rotates in two different directions, the drive shaft 4111 has different power transmission paths and a driving relationship between the spool 11 and the head housing 12 changes so that the string trimmer line 20 can be released from the spool 11 when the spool 11 and the head housing 12 move relatively. The drive shaft 4111 of the string trimmer 100 can drive the string trimmer line 20 to trim grass in both two different rotation directions. The string trimmer is applicable to more usage scenarios and a wide range of users.

In this example, when the drive shaft 4111 rotates along one rotation direction (the first direction D1 or the second direction D2), according to the line releasing instruction, the string trimmer head 10 makes the spool 11 and the head housing 12 move relatively so that the string trimmer head 10 can make the string trimmer line 20 released from the spool 11. Meanwhile, according to a winding instruction, the string trimmer head 10 can make the string trimmer line 20 wound onto the spool 11 when the spool 11 rotates in the same rotation direction. The different power transmission paths are used so that when the string trimmer head 10 rotates in two different directions, the power transmission paths do not interfere with each other, achieving stable power transmission and stable function implementation.

The line releasing process can be performed when the drive shaft 4111 rotates along both two directions. For example, when the string trimmer line 20 is wound onto the spool 11 along the second direction D2, the string trimmer line 20 is released from the spool 11 along the first direction D1, and the line releasing is implemented when the spool 11 rotates relative to the head housing 12 along the first direction D1. To make the spool 11 rotate relative to the head housing 12 along the first direction D1, optionally, when the drive shaft 4111 rotates along the first direction D1, the rotational speed of the spool 11 along the first direction D1 is higher than the rotational speed of the head housing 12 along the first direction D1. Optionally, when the drive shaft 4111 rotates along the second direction D2, the rotational speed of the head housing 12 along the second direction D2 is higher than the rotational speed of the spool 11 along the second direction D2. At this time, the spool 11 rotates relative to the head housing 12 along the first direction D1. Thus, the line releasing process can be performed no matter whether the drive shaft 4111 rotates along the first direction D1 or the second direction D2.

As shown in FIGS. 3 to 5, in this example, to implement the above two power transmission paths and the switching between the power transmission paths, the string trimmer head 10 includes a clutch mechanism 13, where the clutch mechanism 13 transmits power output from the drive shaft 4111 to the spool 11 or the head housing 12 according to the rotation direction of the drive shaft 4111 in at least the first cutting mode and the second cutting mode. For example, in the first cutting mode, the drive shaft 4111 drives, via the clutch mechanism 13, the spool 11 to rotate, and the spool 11 drives the head housing 12 to rotate. In the second cutting mode, the drive shaft 4111 drives, via the clutch mechanism 13, the head housing 12 to rotate, and the head housing 12 drives the spool 11 to rotate. The clutch mechanism 13 is disposed in the present application to switch the power transmission path of the drive shaft 4111, and the different power transmission paths are used so that regardless of the direction in which the string trimmer line 20 is wound onto spool 11, the string trimmer head 10 can perform cutting in two different rotation directions, and the string trimmer line 20 can be released from the spool 11 when the string trimmer head 10 rotates in two different directions. When the string trimmer head 10 rotates in two different directions, under the action of the clutch mechanism 13, the drive shaft 4111 has different power transmission paths to the string trimmer line 20 and the driving relationship between the spool 11 and the head housing 12 changes so that the string trimmer line 20 can be released from the spool 11 when the spool 11 and the head housing 12 move relatively. Compared with a switching manner according to whether an interaction force threshold is exceeded, the clutch mechanism 13 switches the power transmission path according to the rotation direction of the drive shaft 4111 so that the power transmission is switched with higher stability, and an operating system of the string trimmer head 10 has higher reliability and a lower failure rate.

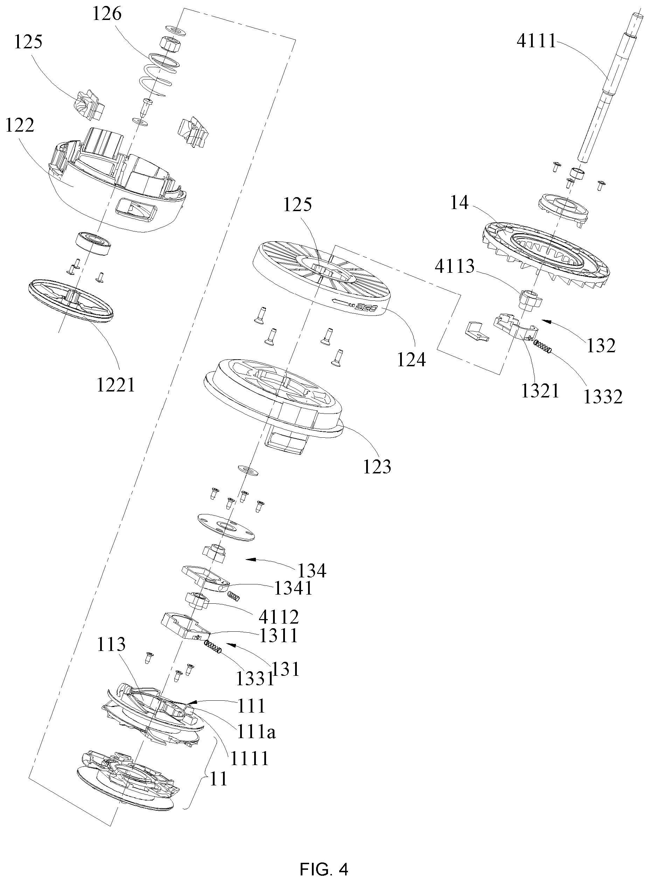

As shown in FIGS. 4 to 8B, the clutch mechanism 13 includes a first portion 131 and a second portion 132. The first portion 131 is disposed between the drive shaft 4111 and the spool 11 and transmits the output power of the drive shaft 4111 to the spool 11. The second portion 132 is disposed between the drive shaft 4111 and the head housing 12 and transmits the output power of the drive shaft 4111 to the head housing 12. It is to be understood that "the first portion 131 is disposed between the drive shaft 4111 and the spool 11" and "the second portion 132 is disposed between the drive shaft 4111 and the head housing 12", which are understood as follows: in one aspect, in position, the first portion 131 at least partially overlaps any one of the drive shaft 4111 or the spool 11 in an axial direction of the drive shaft 4111 or at least partially overlaps any one of the drive shaft 4111 or the spool 11 in a radial direction of the drive shaft 4111, and the second portion 132 at least partially overlaps any one of the drive shaft 4111 or the head housing 12 in the axial direction of the drive shaft 4111 or at least partially overlaps any one of the drive shaft 4111 or the head housing 12 in the radial direction of the drive shaft 4111. In the other aspect, in connection relationship, the first portion 131 is directly or indirectly connected to the drive shaft 4111 and the spool 11, separately or has a direct or indirect power transmission path with the drive shaft 4111 and the spool 11, and the second portion 132 is directly or indirectly connected to the drive shaft 4111 and the head housing 12, separately or has a direct or indirect power transmission path with the drive shaft 4111 and the head housing 12.

In this example, the first portion 131 is disposed between the drive shaft 4111 and the spool 11 and enables the drive shaft 4111 rotating along the first direction D1 to drive the string trimmer head 10 to rotate about the rotation axis 101 along the first direction D1 and drive the string trimmer line 20 to rotate to cut vegetation. The second portion 132 is disposed between the drive shaft 4111 and the head housing 12 and enables the drive shaft 4111 rotating along the second direction D2 to drive the string trimmer head 10 to rotate about the rotation axis 101 along the second direction D2 and drive the string trimmer line 20 to rotate to cut vegetation. In the first cutting mode, the drive shaft 4111 rotates along the first direction D1, the first portion 131 transmits the output power of the drive shaft 4111 to the spool 11, the spool 11 drives the head housing 12 to rotate synchronously, and the string trimmer head 10 rotates along the first direction D1. In the second cutting mode, the drive shaft 4111 rotates along the second direction D2, the second portion 132 transmits the output power of the drive shaft 4111 to the head housing 12, the head housing 12 drives the spool 11 to rotate synchronously, and the string trimmer head 10 rotates along the second direction D2.

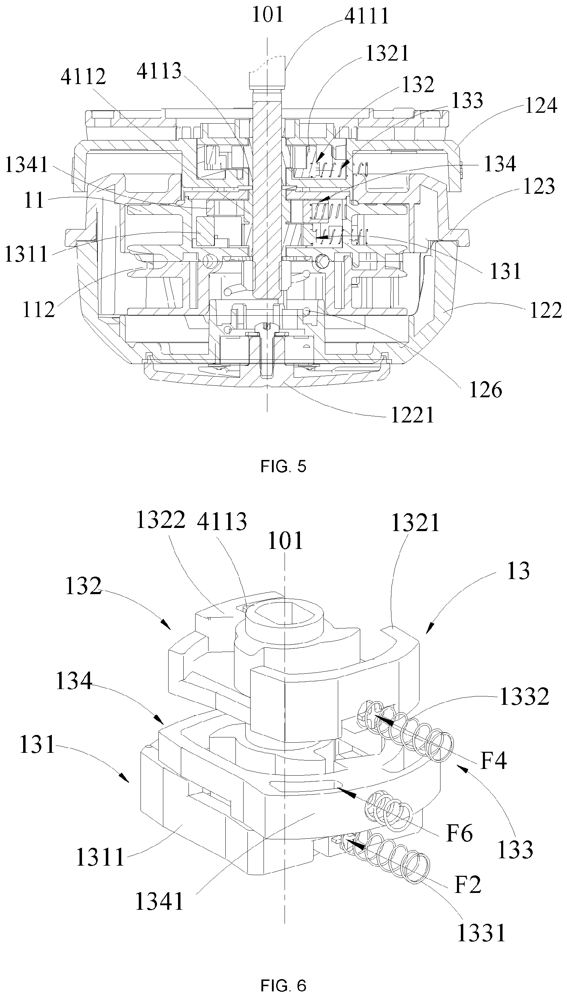

With continued reference to FIGS. 5 and 6, the first portion 131 includes a first drive block 1311 disposed on the spool 11, and the second portion 132 includes a second drive block 1321 disposed on the head housing 12. The first portion 131 and the second portion 132 are disposed separately, that is to say, the first portion 131 and the second portion 132 are independent components and disposed on the spool 11 and the head housing 12, respectively so that when the string trimmer head 10 rotates in the first direction D1 and the second direction D2, the power output from the drive shaft 4111 is transmitted through the different power transmission paths to drive the string trimmer head 10 to rotate.

For example, as shown in FIGS. 6 to 7B, the first portion 131 includes a first inner ratchet tooth 1312. For example, the first drive block 1311 is provided with the first inner ratchet tooth 1312. To transmit power between the drive shaft 4111 and the first portion 131, the drive shaft 4111 is formed with or connected to first outer ratchet teeth 4112. When the drive shaft 4111 of the electric motor 411 rotates along the first direction D1, one of the first outer ratchet teeth 4112 is engaged with the first inner ratchet tooth 1312 so that the drive shaft 4111 drives the string trimmer head 10 to rotate along the first direction D1.

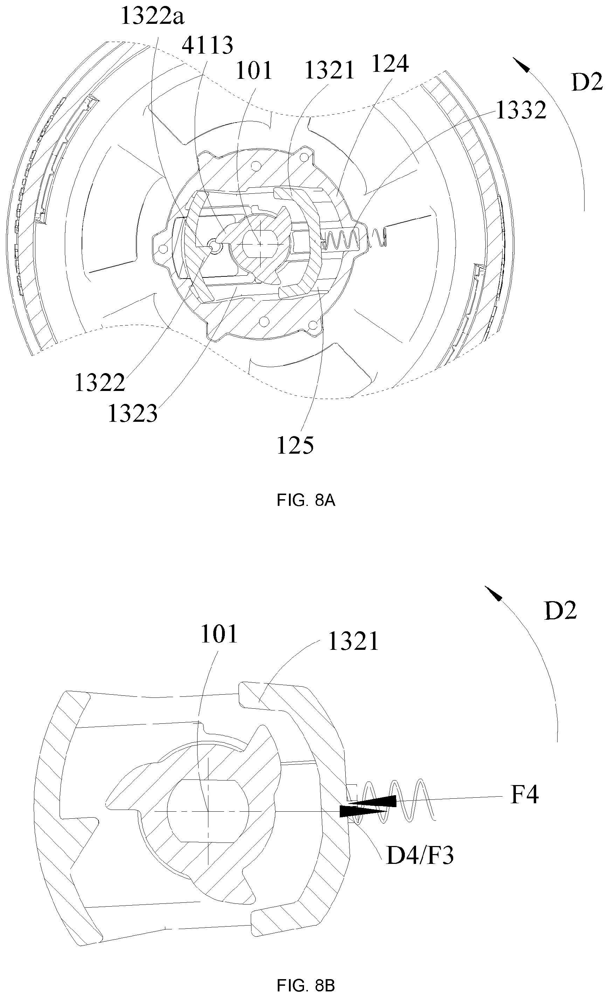

As shown in FIGS. 6, 8A, and 8B, the second portion 132 includes a second inner ratchet tooth 1322. For example, the second drive block 1321 is provided with the second inner ratchet tooth 1322. To transmit power between the drive shaft 4111 and the second portion 132, the drive shaft 4111 is formed with or connected to second outer ratchet teeth 4113. When the drive shaft 4111 of the electric motor 411 rotates along the second direction D2, one of the second outer ratchet teeth 4113 is engaged with the second inner ratchet tooth 1322 so that the drive shaft 4111 drives the string trimmer head 10 to rotate along the second direction D2.

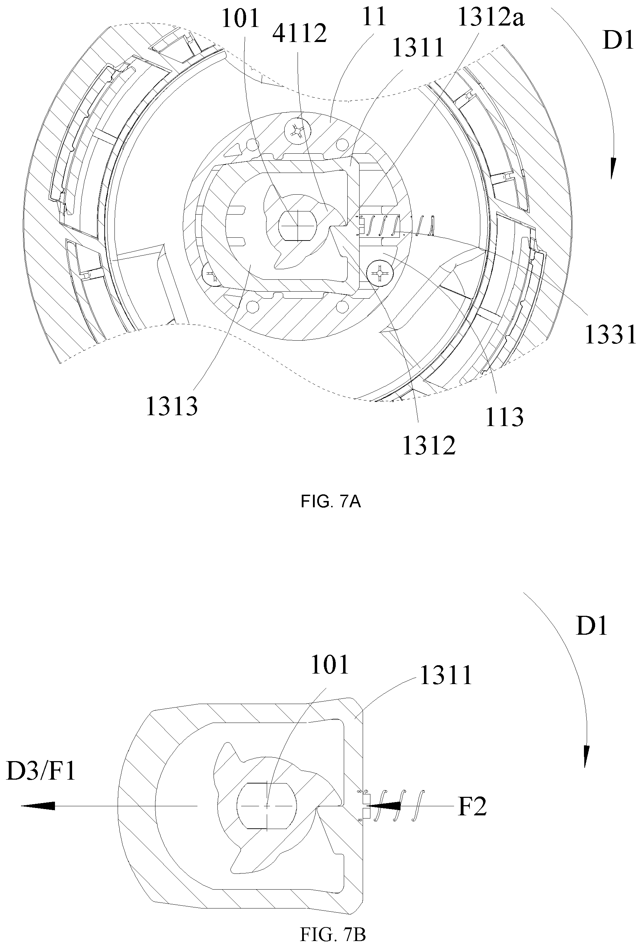

As shown in FIGS. 7A to 8B, in this example, a tooth slot 1312a of the first inner ratchet tooth 1312 and a tooth slot 1322a of the second inner ratchet tooth 1322 face opposite directions. Tooth slots of a first outer ratchet tooth 4112 and a second outer ratchet tooth 4113 mating with the first inner ratchet tooth 1312 and the second inner ratchet tooth 1322 also face opposite directions. For example, when the string trimmer head 10 is viewed from the electric motor 411, the first direction D1 may be considered as the clockwise direction, and correspondingly, the second direction D2 may be considered as the counterclockwise direction. When the drive shaft 4111 rotates along the first direction D1, the first outer ratchet tooth 4112 moves towards the first inner ratchet tooth 1312, and the second outer ratchet tooth 4113 moves away from the second inner ratchet tooth 1322. When the drive shaft 4111 moves along the second direction D2, the first outer ratchet tooth 4112 moves away from the first inner ratchet tooth 1312, and the second outer ratchet tooth 4113 moves towards the second inner ratchet tooth 1322.

As shown in FIGS. 4 to 7B, the spool 11 rotates about the rotation axis 101, the spool 11 is provided with a first accommodation groove 113, the first drive block 1311 is mounted in the first accommodation groove 113, and the first drive block 1311 rotates synchronously with the spool 11. The first drive block 1311 is provided with a first inner hole 1313, the first inner ratchet tooth 1312 is on an inner side of the first inner hole 1313 and extends towards the center of the first drive block 1311, and the first outer ratchet teeth 4112 are disposed in the first inner hole 1313. Multiple first outer ratchet teeth 4112 are arranged along a circumferential direction of the drive shaft 4111. When the drive shaft 4111 rotates about the rotation axis 101, the first outer ratchet teeth 4112 rotate about the rotation axis 101 in synchronization with the drive shaft 4111. The first drive block 1311 is an eccentric structure, and the centroid of the first drive block 1311 is eccentric relative to the rotation axis 101. The first drive block 1311 generates a centrifugal force F1 during rotation. In this example, the first drive block 1311 generates the centrifugal force along a third direction D3, and the first accommodation groove 113 allows the first drive block 1311 to slide along the third direction D3 in the first accommodation groove 113. The first accommodation groove 113 prevents the first drive block 1311 from sliding along a direction perpendicular to the third direction D3 in the first accommodation groove 113 and from rotating in the first accommodation groove 113. During the movement of the string trimmer head 10, the first drive block 1311 moves or has a motion tendency along the third direction D3 due to the centrifugal force F1.

The first drive block 1311 has a first position and a second position. The first drive block 1311 moves along the third direction D3 to move between the first position and the second position, and the first accommodation groove 113 guides the first drive block 1311 to move between the first position and the second position. The first position of the first drive block 1311 is an initial position of the first drive block 1311, that is to say, the first drive block 1311 is at the first position when the string trimmer head 10 of the string trimmer 100 does not rotate or rotates at a low speed. When the centrifugal force generated by the eccentric structure of the first drive block 1311 reaches a preset magnitude, the first drive block 1311 moves from the first position to the second position.

In this example, the first portion 131 is connected to a reset structure 133. For example, the first portion 131 is connected to a first biasing element 1331 so that no additional force is applied to the first drive block 1311 when the centrifugal force does not reach the preset magnitude, and the first drive block 1311 returns from the second position to the first position. In some other examples, the reset structure 133 includes a magnetic attraction element. In this example, the first biasing element 1331 includes a coil spring, and the first biasing element 1331 applies a biasing force F2 to the first drive block 1311 along a direction from the second position to the first position. In this example, the biasing force F2 applied by the first biasing element 1331 to the first drive block 1311 and the centrifugal force F1 of the first drive block 1311 are in the same direction, and the first biasing element 1331 applies a force to the first drive block 1311 along the third direction D3. At the same time, the first drive block 1311 moves along the third direction D3, and the first inner ratchet tooth 1312 moves towards the first outer ratchet tooth 4112.

For example, one end of the first biasing element 1331 is connected to an inner side of the first accommodation groove 113, and the other end of the first biasing element 1331 is connected to an outer wall of the first drive block 1311. Optionally, a position where the first biasing element 1331 is connected to the first drive block 1311 is opposite to the tooth slot of the first inner ratchet tooth 1312. Along a width direction of the first drive block 1311, that is, along the direction perpendicular to the third direction D3, the first inner ratchet tooth 1312 partially overlaps the first biasing element 1331. In some examples, a meshing line between the first inner ratchet tooth 1312 and the first outer ratchet tooth 4112 substantially coincides with an axis of the first biasing element 1331, or the axis of the first biasing element 1331 passes through a midpoint of the meshing line between the first inner ratchet tooth 1312 and the first outer ratchet tooth 4112.

As shown in FIGS. 4 to 6 and FIGS. 8A and 8B, the head housing 12 rotates about the rotation axis 101, the head housing 12 is provided with a second accommodation groove 125, and the second drive block 1321 is mounted in the second accommodation groove 125. Optionally, the support plate 124 is provided with a groove extending into the upper housing 123, that is to say, the support plate 124 is provided with the second accommodation groove 125, and the second accommodation groove 125 extends into the upper housing 123 so that the second drive block 1321 simultaneously drives the support plate 124 and the upper housing 123 to rotate synchronously. The second drive block 1321 is provided with a second inner hole 1323, and the second inner ratchet tooth 1322 is on an inner side of the second inner hole 1323 and extends towards the center of the second drive block 1321. The second outer ratchet teeth 4113 are disposed in the second inner hole 1323. Multiple second outer ratchet teeth 4113 are arranged along the circumferential direction of the drive shaft 4111. When the drive shaft 4111 rotates, the second outer ratchet teeth 4113 rotate about the rotation axis 101 in synchronization with the drive shaft 4111. The second drive block 1321 is an eccentric structure, and the centroid of the second drive block 1321 is eccentric relative to the rotation axis 101. The second drive block 1321 generates a centrifugal force during rotation. In this example, the second drive block 1321 generates a centrifugal force F3 along a fourth direction D4, and the second accommodation groove 125 allows the second drive block 1321 to slide along the fourth direction D4 in the second accommodation groove 125. The second accommodation groove 125 prevents the second drive block 1321 from sliding along a direction perpendicular to the fourth direction D4 in the second accommodation groove 125 and from rotating in the second accommodation groove 125. During the movement of the string trimmer head 10, the second drive block 1321 moves or has a motion tendency along the fourth direction D4 due to the centrifugal force F3.

The second drive block 1321 has a first position and a second position. The second drive block 1321 moves along the fourth direction D4 to move between the first position and the second position, and the second accommodation groove 125 guides the second drive block 1321 to move between the first position and the second position. The first position of the second drive block 1321 is an initial position of the second drive block 1321, that is to say, the second drive block 1321 is at the first position when the string trimmer head 10 of the string trimmer 100 does not rotate or rotates at a low speed. When the centrifugal force F3 generated by the eccentric structure of the second drive block 1321 reaches a preset magnitude, the second drive block 1321 moves from the first position to the second position.

In this example, the second portion 132 is connected to the reset structure 133. For example, the second portion 132 is connected to a second biasing element 1332 so that no additional force is applied to the second drive block 1321 when the centrifugal force F3 does not reach the preset magnitude, and the second drive block 1321 returns from the second position to the first position. In some other examples, the reset structure 133 includes a magnetic attraction element. In this example, the second biasing element 1332 includes a coil spring, and the second biasing element 1332 applies a biasing force F4 to the second drive block 1321 along a direction from the second position to the first position. In this example, the biasing force F4 applied by the second biasing element 1332 to the second drive block 1321 and the centrifugal force F3 of the second drive block 1321 are in opposite directions, and the second biasing element 1332 applies a force to the second drive block 1321 along a direction opposite to the third direction D3. When the second drive block 1321 moves along the fourth direction D4, the second inner ratchet tooth 1322 moves towards the second outer ratchet tooth 4113. When the second drive block 1321 moves along the direction opposite to the fourth direction D4, the second inner ratchet tooth 1322 moves away from the second outer ratchet tooth 4113. In this example, the biasing force F2 applied by the first biasing element 1331 to the first drive block 1311 and the biasing force F4 applied by the second biasing element 1332 to the second drive block 1321 are in the same direction, and the third direction D3 of the centrifugal force F1 of the first drive block 1311 is opposite to the fourth direction D4 of the centrifugal force F3 of the second drive block 1321.

For example, one end of the second biasing element 1332 is connected to an inner side of the second accommodation groove 125, and the other end of the second biasing element 1332 is connected to an outer wall of the second drive block 1321. Optionally, the second biasing element 1332 and the second inner ratchet tooth 1322 are disposed on two sidewalls of the second drive block 1321 that are not adjacent to each other. Along a width direction of the second drive block 1321, that is, along the direction perpendicular to the fourth direction D4, the second inner ratchet tooth 1322 partially overlaps the second biasing element 1332. In some examples, a meshing line between the second inner ratchet tooth 1322 and the second outer ratchet tooth 4113 substantially coincides with an axis of the second biasing element 1332, or the axis of the second biasing element 1332 passes through a midpoint of the meshing line between the second inner ratchet tooth 1322 and the second outer ratchet tooth 4113.

In the clutch mechanism 13, the first drive block 1311 and the second drive block 1321 mate with the drive shaft 4111 in different directions when the drive shaft 4111 have different rotation directions, the power transmission paths are disconnected and connected, and rotational power is transmitted through ratchet tooth engagement so that the clutch mechanism 13 selectively transmits the power output from the drive shaft 4111 to at least one of the spool 11 or the head housing 12 according to a state of the drive shaft 4111. The eccentric structures of the first drive block 1311 and the second drive block 1321 are displaced due to the centrifugal forces F1 and F3 during rotation so that the transmission path is switched through a clutch. The specific operating processes of the clutch mechanism 13 in different operating modes of the string trimmer 100 are disclosed in detail below.

As shown in FIGS. 4 and 10 to 12, to implement the synchronous rotation of the spool 11 and the head housing 12 in the first cutting mode and the second cutting mode, in this example, the spool 11 is formed with or connected to a first drive portion 111, and the head housing 12 is formed with or connected to a first mating portion 121. The first drive portion 111 includes first meshing teeth 111a each formed with a first drive surface 1111. The first mating portion 121 includes first mating teeth 121a each formed with a first mating surface 1211. When the string trimmer head 10 rotates and the spool 11 and the head housing 12 rotate synchronously, the first drive surface 1111 meshes with the first mating surface 1211 so that the spool 11 drives the head housing 12 to rotate or the head housing 12 drives the spool 11 to rotate. For example, the first drive portion 111 includes multiple first meshing teeth 111a arranged along a circumferential direction of the rotation axis 101. Correspondingly, the first mating portion 121 includes multiple first mating teeth 121a arranged along the circumferential direction of the rotation axis 101. Optionally, the first drive portion 111 is disposed on an upper portion of the spool 11, and the first mating portion 121 is disposed on the inner side of the upper housing 123 and faces the upper portion of the spool 11.

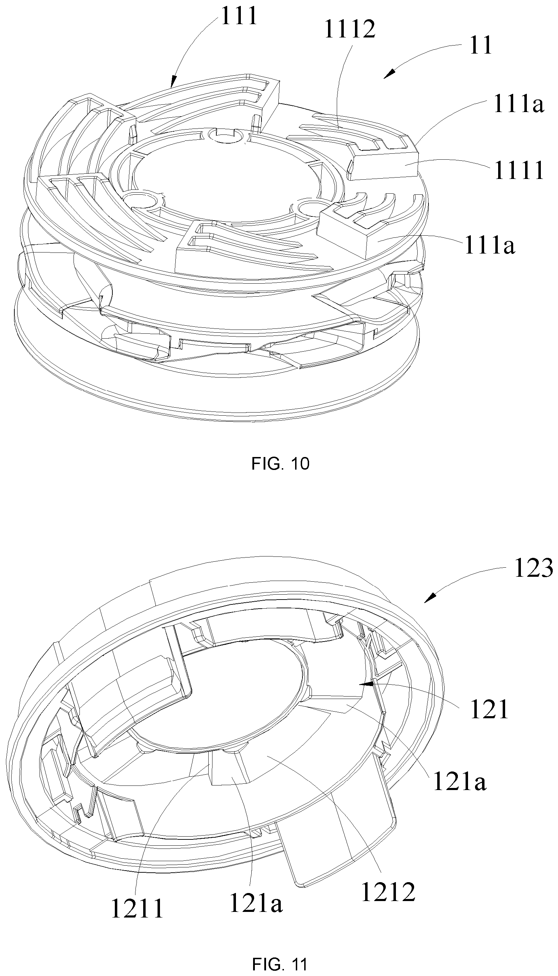

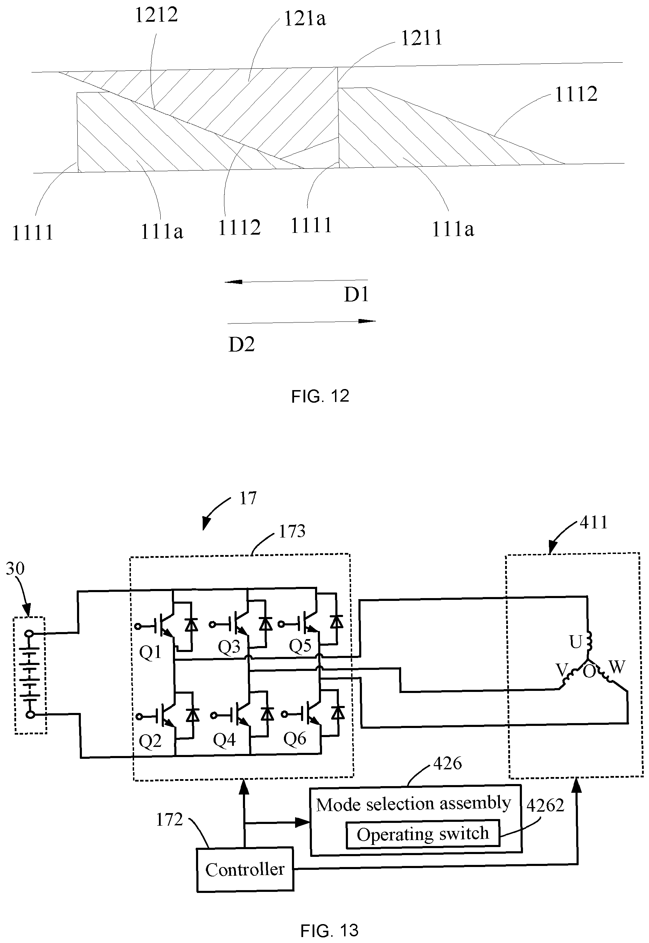

As shown in FIGS. 10 and 12, the first meshing teeth 111a are each formed with the first drive surface 1111 and a first inclined surface 1112. As shown in FIGS. 11 and 12, the first mating teeth 121a are each formed with the first mating surface 1211 and a second inclined surface 1212. The first inclined surface 1112 and the first drive surface 1111 are located on two sides of a first meshing tooth 111a. The second inclined surface 1212 and the first mating surface 1211 are located on two sides of a first mating tooth 121a. The first drive surface 1111 and the first mating surface 1211 are separately disposed along an up and down direction, that is to say, the first drive surface 1111 and the first mating surface 1211 are configured for vertical surface engagement. With the spool 11 as an example, the first meshing tooth 111a protrudes from an upper surface of the spool 11, and the first drive surface 1111 is substantially perpendicular to the upper surface of the spool 11. With the head housing 12 as an example, the first mating tooth 121a protrudes from an inner wall of an upper portion of the upper housing 123, and the first mating surface 1211 is substantially perpendicularly to the inner wall of the upper portion of the upper housing 123.

In this example, when the string trimmer head 10 rotates along the first direction D1, the first drive portion 111 drives the first mating portion 121. When the string trimmer head 10 rotates along the second direction D2, the first mating portion 121 drives the first drive portion 111. For example, when the string trimmer head 10 rotates along the first direction D1, the first drive surface 1111 drives the first mating surface 1211. When the string trimmer head 10 rotates along the second direction D2, the first mating surface 1211 drives the first drive surface 1111. That is to say, in the first cutting mode, the first drive surface 1111 drives the first mating surface 1211, and in the second cutting mode, the first mating surface 1211 drives the first drive surface 1111. In this example, a driving relationship between the first drive surface 1111 and the first mating surface 1211 changes in the first cutting mode and the second cutting mode, ensuring that the different power transmission paths are used when the string trimmer head 10 rotates in two different directions. Moreover, during rotation in both the two different directions, the first drive surface 1111 meshes with the first mating surface 1211, ensuring the synchronous rotation of the head housing 12 and the spool 11. In the related art, to implement the synchronous rotation of the head housing and the spool of the string trimmer that can perform cutting in only one direction, the first drive portion and the first mating portion in the head housing and the spool mesh with each other, ensuring a stable state of synchronous rotation. In this example, the string trimmer head 10 can perform cutting in both two different directions, and to implement the synchronous rotation of the head housing 12 and the spool 11, the first drive portion 111 and the first mating portion 121 in the head housing 12 and the spool 11 are still used, which mesh with each other, ensuring a stable state of synchronous rotation. The driving relationship between the first drive portion 111 and the first mating portion 121 changes so that two different power transmission paths during rotation in different directions are formed without adding a transmission component. Compared with a first drive surface 1111 and a first mating surface 1211 arranged obliquely, the first drive surface 1111 and the first mating surface 1211 are configured for vertical surface engagement, thereby preventing the friction, slip, or even disengagement between the first drive surface 1111 and the first mating surface 1211 during mating in one driving relationship and achieving a more stable driving relationship.

In this example, when the string trimmer 100 receives a line releasing instruction in the first cutting mode and the second cutting mode, the first drive surface 1111 is displaced axially relative to the first mating surface 1211 so that the spool 11 can rotate relative to the head housing 12, thereby releasing the string trimmer line 20 from the spool 11. The line releasing instruction includes an instruction signal including an external force, magnetic force, or another force applied by the outside to the string trimmer head 10. In some examples, the line releasing instruction includes an electrical signal.

As shown in FIGS. 3 to 5, the string trimmer head 10 includes a knocking cap 1221 connected to the lower housing 122, and the knocking cap 1221 is knocked to displace the first drive surface 1111 axially relative to the first mating surface 1211. For example, the string trimmer head 10 is knocked so that the head housing 12 moves relative to the spool 11 along an axial direction of the rotation axis 101. In some examples, the head housing 12 has a first axial position before the line releasing instruction is received and a second axial position after the line releasing instruction is received. For example, the head housing 12 has the first axial position relative to the spool 11 and the second axial position relative to the spool 11. When the head housing 12 is at the first axial position relative to the spool 11, the first mating portion 121 mates with the first drive portion 111 so that the rotating spool 11 can drive the head housing 12 to rotate synchronously, and the rotating head housing 12 can drive the spool 11 to rotate synchronously. When the head housing 12 is at the second axial position relative to the spool 11, the first mating portion 121 is displaced axially relative to the first drive portion 111, and the first mating portion 121 is disengaged from the first drive portion 111 so that the spool 11 can rotate relative to the head housing 12, thereby releasing the string trimmer line 20. That is to say, after the string trimmer head 10 is knocked, the head housing 12 moves from the first axial position to the second axial position relative to the spool 11.

In this example, in the first cutting mode, the drive shaft 4111 rotates along the first direction D1, the drive shaft 4111 drives the spool 11 to rotate, and the spool 11 drives the head housing 12 to rotate. When the head housing 12 is knocked to be at the second axial position relative to the spool 11, the spool 11 is disengaged from the head housing 12, the drive shaft 4111 still drives the spool 11 to rotate synchronously, and the rotational speed of the spool 11 is higher than the rotational speed of the head housing 12 so that the spool 11 rotates relative to the head housing 12, thereby releasing the string trimmer line 20. In the second cutting mode, the drive shaft 4111 rotates along the second direction D2, the drive shaft 4111 drives the head housing 12 to rotate, and the head housing 12 drives the spool 11 to rotate. When the head housing 12 is knocked to be at the second axial position relative to the spool 11, the drive shaft 4111 drives the head housing 12 to rotate synchronously, and the rotational speed of the head housing 12 along the second direction D2 is higher than the rotational speed of the spool 11 so that the spool 11 rotates relative to the head housing 12, thereby releasing the string trimmer line 20.

When the string trimmer 100 is in the cutting mode, the user knocks the string trimmer head 10, and the knocking cap 1221 is in contact with the ground so that the head housing 12 slides to such a position that the first meshing teeth 111a and the first mating teeth 121a are disengaged from each other and rotate relatively. Further, knocking causes the head housing 12 to slide to the second axial position relative to the spool 11 so that the head housing 12 rotates relative to the spool 11 at a lower rotational speed, a portion of the string trimmer line 20 wound on the spool 11 is released to the outside of the head housing 12, and the string trimmer 100 is in a line releasing mode. This has the following advantage: when the motor 411 still rotates at a rotational speed in the cutting mode, a relative rotational speed between the head housing 12 and the spool 11 is controlled so that the user can be prevented from releasing an excessive portion of the string trimmer line 20 every time the user knocks. In some examples, the released length of the string trimmer line 20 is controlled according to a time of knocking. A manner for controlling the released length of the string trimmer line 20 has been fully disclosed in the related art. Under the enlightenment of the line releasing principle disclosed in the present application, those skilled in the art can obtain a specific structure and an implementation for controlling the released length of the string trimmer line 20 through logical analysis.

The string trimmer head 10 further includes a spring 126 disposed between the lower housing 122 and the spool 11 to apply a force for moving the head housing towards the first axial position at which the head housing rotates synchronously with the spool 11. Optionally, the spring 126 is a compression spring. When the head housing is not subjected to an external force generated from the knocking of the user on the ground, the spring 126 applies a force to the head housing to return the head housing to the first axial position. The spool 11 is formed with a groove 114. The spring 126 is disposed in the groove 114. A protruding portion 1222 protrudes from the lower housing 122 towards the upper housing 123. The protruding portion 1222 mates with the groove 114 to guide the head housing to move relative to the spool 11 between the first axial position and the second axial position. The spring 126 is disposed between the protruding portion 1222 and the spool 11. One end of the spring 126 is in contact with the protruding portion 1222. A first contact member is provided at the other end of the spring 126. The first contact member reduces the abrasion between the spool 11 and the spring 126. The first contact member is a metal member. The spool 11 and the head housing 12 are plastic members.

In this example, in addition to the first cutting mode in which the string trimmer head 10 rotates along the first direction D1, the second cutting mode in which the string trimmer head 10 rotates along the second direction D2, and the line releasing process without a shutdown in the first cutting mode and the second cutting mode, the string trimmer 100 has a winding mode. When the winding mode of the string trimmer 100 is selected, the motor 411 drives one of the spool 11 or the head housing 12 to rotate to wind the string trimmer line 20 onto the spool 11. In this example, in the winding mode, the electric motor 411 drives the spool 11 or the head housing 12 to wind the string trimmer line 20 onto the spool 11 so that the user does not need to contact the string trimmer head 10, and the winding is performed at a fast speed, which is simple and safe for the user to operate.

Optionally, when the string trimmer line 20 is required to be wound on the spool 11 along the second direction D2, the string trimmer 100 is switched to the winding mode. As shown in FIGS. 1 and 2, the rotation of the head housing 12 is locked by a locking portion 15, the drive shaft 4111 rotates along the second direction D2, and the drive shaft 4111 drives the spool 11 to rotate along the second direction D2. The locking portion 15 includes a pin 151 disposed on the string trimmer head. The pin 151 is inserted into the first housing 412 of the electric motor and then into the head housing 12 to prevent the rotation of the head housing 12. When the drive shaft 4111 drives the spool 11 to rotate along the second direction D2, the first drive surface 1111 of the first drive portion 111 and the first mating surface 1211 of the first mating portion 121 move away from each other, and the first inclined surface 1112 of the first drive portion 111 and the second inclined surface 1212 of the first mating portion 121 slide relative to each other so that the spool 11 and the head housing 12 move relatively.

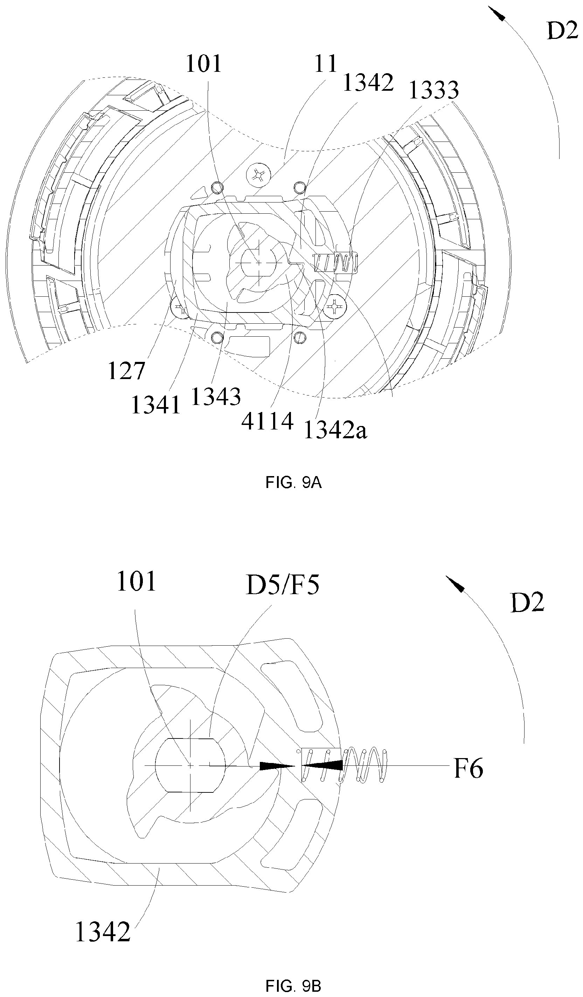

As shown in FIGS. 3 to 5, 9A, and 9B, the clutch mechanism 13 further includes a third portion 134, and the third portion 134 is disposed between the drive shaft 4111 and the spool 11 and transmits the output power of the drive shaft 4111 to the spool 11. It is to be understood that "the third portion 134 is disposed between the drive shaft 4111 and the spool 11", which is understood as follows: in one aspect, in position, the third portion 134 at least partially overlaps any one of the drive shaft 4111 or the spool 11 in the axial direction of the drive shaft 4111 or at least partially overlaps any one of the drive shaft 4111 or the spool 11 in the radial direction of the drive shaft 4111. In the other aspect, in connection relationship, the third portion 134 is directly or indirectly connected to the drive shaft 4111 and the spool 11, separately or has a direct or indirect power transmission path with the drive shaft 4111 and the spool 11.

The third portion 134 is disposed between the drive shaft 4111 and the spool 11 and enables the drive shaft 4111 rotating along the second direction D2 to drive the spool 11 to rotate. The third portion 134 includes a third drive block 1341 disposed on the spool 11. The third portion 134 includes a third inner ratchet tooth 1342. For example, the third drive block 1341 is provided with the third inner ratchet tooth 1342. To transmit power between the drive shaft 4111 and the third portion 134, the drive shaft 4111 is formed with or connected to third outer ratchet teeth 4114. When the drive shaft 4111 of the electric motor 411 rotates along the second direction D2, one of the third outer ratchet teeth 4114 is engaged with the third inner ratchet tooth 1342 to drive the spool 11 to rotate along the second direction D2. In this example, a tooth slot 1342a of the third inner ratchet tooth 1342 and the tooth slot 1312a of the first inner ratchet tooth 1312 face opposite directions, and the tooth slot 1342a of the third inner ratchet tooth 1342 and the tooth slot 1322a of the second inner ratchet tooth 1322 face the same direction. When the drive shaft 4111 rotates along the first direction D1, a third outer ratchet tooth 4114 moves away from the third inner ratchet tooth 1342. When the drive shaft 4111 moves along the second direction D2, the third outer ratchet tooth 4114 moves towards the third inner ratchet tooth 1342.

For example, the spool 11 rotates about the rotation axis 101, the spool 11 is provided with a third accommodation groove 127, the third drive block 1341 is mounted in the third accommodation groove 127, and the third drive block 1341 rotates synchronously with the spool 11. The third drive block 1341 is provided with a third inner hole 1343, the third inner ratchet tooth 1342 is on an inner side of the third inner hole 1343 and extends towards the center of the third drive block 1341, and the third outer ratchet teeth 4114 are disposed in the third inner hole 1343. Multiple third outer ratchet teeth 4114 are arranged along the circumferential direction of the drive shaft 4111. When the drive shaft 4111 rotates, the third outer ratchet teeth 4114 rotate about the rotation axis 101 in synchronization with the drive shaft 4111. The third drive block 1341 is an eccentric structure, and the centroid of the third drive block 1341 is eccentric relative to the rotation axis 101. The third drive block 1341 generates a centrifugal force F5 during rotation. In this example, the third drive block 1341 generates the centrifugal force F5 along a fifth direction D5, and the third accommodation groove 127 allows the third drive block 1341 to slide along the fifth direction D5 in the third accommodation groove 127. The third accommodation groove 127 prevents the third drive block 1341 from sliding along a direction perpendicular to the fifth direction D5 in the third accommodation groove 127 and from rotating in the third accommodation groove 127. During the movement of the string trimmer head 10, the third drive block 1341 moves or has a motion tendency along the fifth direction D5 due to the centrifugal force F5.

The third drive block 1341 has a first position and a second position. The third drive block 1341 moves along the fifth direction D5 to move between the first position and the second position, and the third accommodation groove 127 guides the third drive block 1341 to move between the first position and the second position. The first position of the third drive block 1341 is an initial position of the third drive block 1341, that is to say, the third drive block 1341 is at the first position when the string trimmer head 10 of the string trimmer 100 does not rotate or rotates at a low speed. When the centrifugal force F5 generated by the eccentric structure of the third drive block 1341 reaches a preset magnitude, the third drive block 1341 moves from the first position to the second position.

In this example, the third portion 134 is connected to the reset structure 133. For example, the third portion 134 is connected to a third biasing element 1333 so that no additional force is applied to the third drive block 1341 when the centrifugal force F5 does not reach the preset magnitude, and the third drive block 1341 returns from the second position to the first position. In some other examples, the reset structure 133 includes a magnetic attraction element. In this example, the third biasing element 1333 includes a coil spring, and the third biasing element 1333 applies a biasing force F6 to the third drive block 1341 along a direction from the second position to the first position. In this example, the biasing force F6 applied by the third biasing element 1333 to the third drive block 1341 and the centrifugal force F5 of the third drive block 1341 are in opposite directions, and the third biasing element 1333 applies the biasing force F6 to the third drive block 1341 along a direction opposite to the fifth direction D5. When the third drive block 1341 moves along the fifth direction D5, the third inner ratchet tooth 1342 moves away from the third outer ratchet tooth 4114. When the third drive block 1341 moves along the direction opposite to the fifth direction D5, the third inner ratchet tooth 1342 moves towards the third outer ratchet tooth 4114. In this example, the biasing force F6 applied by the third biasing element 1333 to the third drive block 1341 and the biasing force F4 applied by the second biasing element 1332 to the second drive block 1321 are in the same direction, and the fifth direction D5 of the centrifugal force F5 of the third drive block 1341 is the same as the fourth direction D4 of the centrifugal force F3 of the second drive block 1321.

For example, one end of the third biasing element 1333 is connected to an inner side of the third accommodation groove 127, and the other end of the third biasing element 1333 is connected to an outer wall of the third drive block 1341. Optionally, a position where the third biasing element 1333 is connected to the third drive block 1341 is opposite to the tooth slot of the third inner ratchet tooth 1342. Along a width direction of the third drive block 1341, that is, along the direction perpendicular to the third direction D3, the third inner ratchet tooth 1342 partially overlaps the third biasing element 1333. In some examples, a meshing line between the third inner ratchet tooth 1342 and the third outer ratchet tooth 4114 substantially coincides with an axis of the third biasing element 1333, or the axis of the third biasing element 1333 passes through a midpoint of the meshing line between the third inner ratchet tooth 1342 and the third outer ratchet tooth 4114.

As shown in FIG. 13, the string trimmer 100 further includes a control circuit 17. The control circuit 17 controls an operating state of the electric motor 411. In this example, the electric motor 411 is a three-phase brushless electric motor 411. The electric motor includes a rotor with permanent magnets and three-phase stator windings U, V, and W that are electronically commutated. In some examples, the three-phase stator windings U, V, and W adopt a star connection. In some other examples, the three-phase stator windings U, V, and W adopt a delta connection. However, it is to be understood that other types of brushless electric motors are also within the scope of the present disclosure. The brushless electric motor may include fewer than or more than three phases. The control circuit 17 includes a driver circuit 173 and a controller 172. The driver circuit 173 is electrically connected to the stator windings U, V, and W of the electric motor 411 and configured to transmit a current from the battery pack 30 to the stator windings U, V, and W to drive the electric motor 411 to rotate. In an example, the driver circuit 173 includes multiple switching elements Q1, Q2, Q3, Q4, Q5, and Q6. A gate terminal of each switching element is electrically connected to the controller 172 and receives a control signal from the controller 172. A drain or source of each switching element is connected to a stator winding U, V, or W of the electric motor 411. The switching elements Q1 to Q6 receive control signals from the controller 172 to change their respective on states, thereby changing the current loaded by the battery pack 30 to the stator windings U, V, and W of the electric motor 411. In an example, the driver circuit 173 may be a three-phase bridge driver circuit including six controllable semiconductor power devices (such as field-effect transistors (FETs), bipolar junction transistors (BJTs), or insulated-gate bipolar transistors (IGBTs)). It is to be understood that the above switching elements may be any other types of solid-state switches, such as IGBTs or BJTs.

The controller 172 is disposed on the circuit board 171, and the circuit board 171 includes a printed circuit board (PCB) and a flexible printed circuit (FPC). The controller 172 adopts a dedicated control chip, for example, a single-chip microcomputer or a microcontroller unit (MCU). Specifically, the controller 172 controls on or off states of the switching elements in the driver circuit 173 through the control chip. In some examples, the controller 172 controls the ratio of an on time of a drive switch to an off time of the drive switch based on a pulse-width modulation (PWM) signal.

The main switch 425 of the string trimmer 100 is connected to the control circuit 17 and controls the electric motor 411 to be powered on or powered off. For example, the main switch 425 is a trigger switch, and the rotational speed of the electric motor 411 is adjusted according to a trigger stroke of the trigger switch. In this example, the trigger switch is coupled to a sliding rheostat, and the sliding rheostat outputs different analog signals according to different trigger strokes of the trigger switch. The trigger stroke of the trigger switch is positively correlated to a duty cycle of the PWM signal for the electric motor 411, and the duty cycle of the PWM signal is positively correlated to the rotational speed of the electric motor 411. When the trigger stroke of the trigger switch is relatively small, the duty cycle of the PWM signal is relatively low, and the rotational speed of the electric motor 411 is also relatively low. In some examples, a mapping relationship between the trigger stroke of the trigger switch and the PWM signal is stored in the controller 172, where the mapping relationship may be linear or non-linear, which is not limited in the examples of the present application.

In this example, the rated rotational speed of the electric motor 411 in the first cutting mode is substantially the same as the rated rotational speed of the electric motor 411 in the second cutting mode. That is to say, the electric motor 411 operates at the same speed in the first cutting mode and the second cutting mode of the string trimmer 100, and no performance loss is caused by different rotation directions and power transmission paths.

In this example, to ensure that the rotating string trimmer line 20 does not pose a danger to the user or the surrounding person during winding, the rotational speed of the drive shaft 4111 along the second direction D2 in the winding mode, that is, the rated rotational speed during winding, is lower than the rated rotational speed of the drive shaft 4111 in the cutting mode. In this example, the rotational speed of the drive shaft is substantially the same as the rotational speed of the spool.

In the cutting mode, the rotational speed of the motor 411 is greater than or equal to 3500 rpm and less than or equal to 8000 rpm. As a specific example, when the string trimmer 100 is in the winding mode, the rotational speed of the spool 11 is greater than or equal to 100 rpm and less than or equal to 2000 rpm. Specifically, the rotational speed of the spool 11 is greater than or equal to 300 rpm and less than or equal to 800 rpm. As another example, the rotational speed of the spool 11 is greater than or equal to 30 rpm and less than or equal to 600 rpm. Alternatively, the rotational speed of the spool 11 is greater than or equal to 60 rpm and less than or equal to 300 rpm.

As shown in FIGS. 1 and 13, the operating device 42 of the string trimmer 100 further includes a mode selection assembly 426 connected to the control circuit 17, and the mode selection assembly 426 is for the user to operate to select the rotation direction of the string trimmer head 10. That is to say, the mode selection assembly 426 is for the user to operate to select the rotation direction of the drive shaft 4111, thereby switching to and confirming the first cutting mode or the second cutting mode of the string trimmer 100 through the mode selection assembly 426. For example, for the string trimmer 100 having the winding mode, the mode selection assembly 426 is for the user to select one of the first cutting mode, the second cutting mode, or the winding mode of the string trimmer 100. The mode selection assembly 426 includes an operating member 4261 and an operating switch 4262, where the operating member 4261 is at least partially disposed on an outer surface of the string trimmer 100 to be convenient for the user to operate. For example, the operating member 4261 is disposed on the handle 421 or the auxiliary handle 422. For example, the operating member 4261 is disposed close to the main switch 425 and convenient for the user to operate. The operating switch 4262 sends a corresponding control signal to the controller 172 in response to an action of the operating member 4261, and the controller 172 generates corresponding control signals for the electric motor 411 according to the control signal to control the rotation direction and rotational speed of the electric motor 411.

The controller 172 of the string trimmer 100 has a memory module, and the string trimmer 100 is configured to, upon power-on, select by default a cutting mode at the time of the last shutdown to operate. For example, when the string trimmer 100 is shut down in the first cutting mode, even if the string trimmer 100 performs winding and starts the electric motor 411 in the winding mode before the next power-on, the string trimmer 100 enters by default the first cutting mode upon the next power-on after the winding mode ends. Operation habits of the user are memorized, an operation time of the user is saved, and the use efficiency is improved.

Based on the preceding technical features in hardware structure, for the string trimmer 100 having the first cutting mode, the second cutting mode, and the winding mode, specific working processes of the string trimmer 100 in different working modes are described below, where it is set that the string trimmer line 20 is required to be wound onto the spool 11 along the second direction D2.

In this example, when the string trimmer 100 is in a shutdown state, in the clutch mechanism 13, the first drive block 1311 of the first portion 131 is at the first position, and the first inner ratchet tooth 1312 at the first position is engaged with the first outer ratchet tooth 4112. The second drive block 1321 of the second portion 132 is at the first position, and the second inner ratchet tooth 1322 at the first position is disengaged from the second outer ratchet tooth. The third drive block 1341 of the third portion 134 is at the first position, and the third inner ratchet tooth 1342 at the first position is engaged with the third outer ratchet tooth 4114. The head housing 12 is at the first axial position relative to the spool 11, and the first drive portion 111 of the spool 11 is engaged with the first mating portion 121 of the head housing 12.

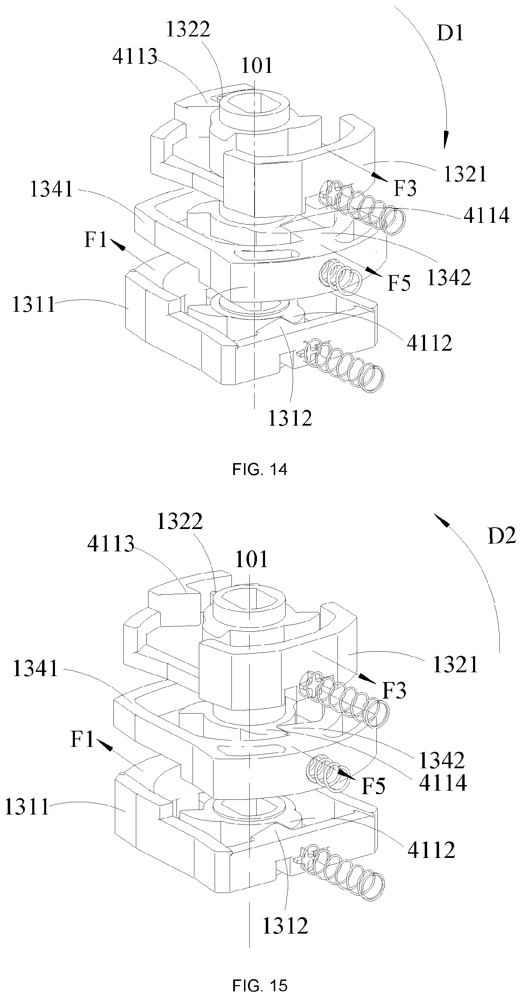

As shown in FIG. 14, when the main switch 425 of the string trimmer 100 is activated, the mode selection assembly 426 selects the first cutting mode, and the electric motor 411 is driven to rotate along the first direction D1. The drive shaft 4111 rotates along the first direction D1, the first outer ratchet tooth 4112 on the drive shaft 4111 is engaged with the first inner ratchet tooth 1312 of the first portion 131 of the clutch mechanism 13, the drive shaft 4111 drives the first portion 131 to rotate along the first direction D1, the first portion 131 is circumferentially limited in the spool 11, and the first portion 131 drives the spool 11 to rotate synchronously along the first direction D1. When the first drive block 1311 is at the first position, the first outer ratchet tooth 4112 is already engaged with the first inner ratchet tooth 1312. When the first outer ratchet tooth 4112 drives the first drive block 1311 to rotate so that the first drive block 1311 generates the centrifugal force F1, the first drive block 1311 moves or has the motion tendency along the third direction D3 due to the centrifugal force F1. That is to say, the first drive block 1311 moves or has a motion tendency towards the first outer ratchet tooth 4112 so that during rotation of the first drive block 1311, the first inner ratchet tooth 1312 is more stably engaged with the first outer ratchet tooth 4112. It is to be understood that the first position and the second position of the first drive block 1311 may coincide with each other. Alternatively, the distance between the first position and the second position of the first drive block 1311 is less than a meshing length between the first inner ratchet tooth 1312 and the first outer ratchet tooth 4112.

As shown in FIG. 12, the first drive portion 111 of the spool 11 drives the first mating portion 121 of the head housing 12, the first drive surface 1111 of the first drive portion 111 is engaged with the first mating surface 1211 of the first mating portion 121, and the spool 11 drives the upper head housing 12 and the lower head housing 12 to rotate synchronously. Since a spline structure is provided between the upper head housing 12 and the support plate 124, the upper head housing 12 drives the support plate 124 to rotate synchronously along the first direction D1. Thus, the power transmission path for rotation in the first direction D1 is built from the drive shaft 4111, through the first portion 131 of the clutch mechanism 13, the spool 11, and the upper/lower head housing 122/123, to the support plate 124.

When the drive shaft 4111 rotates along the first direction D1, the second drive block 1321 of the second portion 132 of the clutch mechanism 13 is driven by the support plate 124 to rotate along the first direction D1. Since the second inner ratchet tooth 1322 is disengaged from the second outer ratchet tooth 4113 when the second drive block 1321 is at the first position, that is, the initial position, when the second drive block 1321 moves along the first direction D1, the second drive block 1321 moves to the second position due to the centrifugal force F3 of the second drive block 1321, and the second inner ratchet tooth 1322 is engaged with the second outer ratchet tooth 4113. However, since the second outer ratchet tooth 4113 connected to the drive shaft 4111 rotates in a direction away from the second inner ratchet tooth 1322, that is to say, the second outer ratchet tooth 4113 and the second inner ratchet tooth 1322 rotate synchronously at substantially the same rotational speed, no driving relationship exists between the second outer ratchet tooth 4113 and the second inner ratchet tooth 1322, and the second outer ratchet tooth 4113 and the second inner ratchet tooth 1322 rotate synchronously at substantially the same speed via their respective drives, thereby avoiding a collision and preventing a dynamic balance of the string trimmer head 10 from being broken when the second outer ratchet tooth 4113 rotates but the second inner ratchet tooth 1322 does not rotate. The third drive block 1341 of the third portion 134 of the clutch mechanism 13 is driven by the spool 11 to rotate along the first direction D1. Since the third inner ratchet tooth 1342 is engaged with the third outer ratchet tooth 4114 when the third drive block 1341 is at the first position, that is, the initial position, when the second drive portion moves along the first direction D1, the third drive block 1341 moves to the second position due to the centrifugal force F5 of the third drive block 1341, the third inner ratchet tooth 1342 is disengaged from the third outer ratchet tooth 4114, and only the first outer ratchet tooth 4112 drives the first inner ratchet tooth 1312 to transmit power to the spool 11, ensuring the overall dynamic balance of the string trimmer head 10.

When the drive shaft 4111 rotates along the first direction D1, if the portion of the string trimmer line 20 exposed out of the head housing 12 is insufficient to cut vegetation, the user knocks the bottom of the string trimmer head 10, that is, the knocking cap 1221 is knocked, the head housing 12 moves from the first axial position to the second axial position, and the first drive surface 1111 is displaced axially relative to the first mating surface 1211 to be disengaged. At this time, the power transmission path for rotation in the first direction D1 is broken between the spool 11 and the upper head housing 12, and the drive shaft 4111 still drives the spool 11 to rotate via the first portion 131 of the clutch mechanism 13. However, the head housing 12 rotates at a lower speed due to the loss of the drive force, the spool 11 and the head housing 12 rotate relatively, and the spool 11 rotates relative to the head housing 12 along the first direction D1, thereby releasing the string trimmer line 20 out of the head housing 12. In the line releasing process, the third drive block 1341 is driven by the spool 11 and remains at the second position due to the centrifugal force F5.

As shown in FIG. 15, when the main switch 425 of the string trimmer 100 is activated, the mode selection assembly 426 selects the second cutting mode, and the drive shaft 4111 of the electric motor 411 rotates along the second direction D2. The drive shaft 4111 rotates along the second direction D2. When the drive shaft 4111 gradually increases the rotational speed from zero, a process in which the rotational speed of the drive shaft 4111 is less than or equal to a first preset rotational speed is defined as a rotation starting process in the second direction D2. The first preset rotational speed is greater than or equal to 100 rpm and less than or equal to 2000 rpm. Specifically, the first preset rotational speed is greater than or equal to 300 rpm and less than or equal to 800 rpm. As another example, the first preset rotational speed is greater than or equal to 30 rpm and less than or equal to 600 rpm. Alternatively, the first preset rotational speed is greater than or equal to 60 rpm and less than or equal to 300 rpm.

In the rotation starting process in the second direction D2, the drive shaft 4111 rotates along the second direction D2, the third drive block 1341 is at the first position, the third inner ratchet tooth 1342 is engaged with the third outer ratchet tooth 4114, and the third outer ratchet tooth 4114 drives the third inner ratchet tooth 1342 so that the third drive block 1341 drives the spool 11 to rotate synchronously along the second direction D2. The drive shaft 4111 drives the spool 11 to rotate along the second direction D2. When the spool 11 rotating in the second direction D2 is intended to drive the head housing 12, the first drive surface 1111 moves in a direction away from the first mating surface 1211. However, due to a relatively low rotational speed of the spool 11 and the friction between the first inclined surface 1112 of the first drive portion 111 and the second inclined surface 1212 of the first mating portion 121, the first inclined surface 1112 and the second inclined surface 1212 rotate synchronously so that the spool 11 drives the upper head housing 12 and the lower head housing 12 to rotate synchronously. Since the spline structure is provided between the upper head housing 12 and the support plate 124, the upper head housing 12 drives the support plate 124 to rotate synchronously along the second direction D2. The second drive block 1321 of the second portion 132 of the clutch mechanism 13 is driven by the support plate 124 to rotate along the second direction D2. Since the second inner ratchet tooth 1322 is disengaged from the second outer ratchet tooth 4113 when the second drive block 1321 is at the first position, that is, the initial position, as the centrifugal force F3 of the second drive block 1321 increases, the second drive block 1321 moves from the first position towards the second position. However, due to a relatively low rotational speed of the second drive block 1321 in the rotation starting process in the second direction D2, the centrifugal force of the second drive block 1321 is insufficient to overcome the biasing force F4 of the reset structure 133.

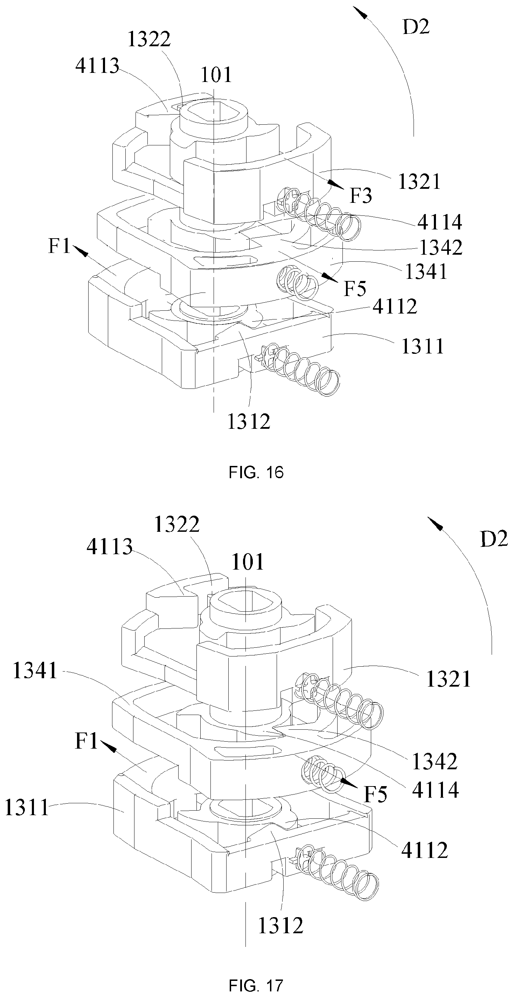

As shown in FIG. 16, when the rotational speed of the third drive block 1341 gradually increases, the centrifugal force F5 of the third drive block 1341 gradually increases, and the third drive block 1341 moves from the first position towards the second position. In this example, when the rotational speed of the drive shaft 4111 is greater than the first preset rotational speed, the third drive block 1341 moves to the second position, and the second drive block 1321 moves to the second position. At this time, the second inner ratchet tooth 1322 is engaged with the second outer ratchet tooth 4113, the third inner ratchet tooth 1342 is disengaged from the third outer ratchet tooth 4114, the power of the drive shaft 4111 is output to the second portion 132 of the clutch mechanism 13, the second outer ratchet tooth 4113 drives the second inner ratchet tooth 1322 to rotate, the second drive block 1321 drives the support plate 124 to rotate along the second direction D2, and the support plate 124 drives, via the spline structure, the upper head housing 12 and the lower head housing 12 to rotate synchronously. The first mating portion 121 in the upper head housing 12 drives the first drive portion 111 on the spool 11 to rotate along the second direction D2, that is to say, the first mating surface 1211 drives the first drive surface 1111 to rotate along the second direction D2 so that the spool 11 rotates synchronously with the head housing 12. Thus, the power transmission path for rotation in the second direction D2 is built from the drive shaft 4111, through the second portion 132 of the clutch mechanism 13, the support plate 124, and the upper/lower head housing 122/123, to the spool 11. For example, the second inner ratchet tooth 1322 may be engaged with the second outer ratchet tooth 4113 at the same time when the third inner ratchet tooth 1342 is disengaged from the third outer ratchet tooth 4114. For example, to ensure transmission stability, the third inner ratchet tooth 1342 may be disengaged from the third outer ratchet tooth 4114 after the second inner ratchet tooth 1322 is stably engaged with the second outer ratchet tooth 4113 for a period of time.

When the drive shaft 4111 rotates along the second direction D2, since the first outer ratchet tooth 4112 connected to the drive shaft 4111 moves in a direction away from the first inner ratchet tooth 1312, that is to say, the first outer ratchet tooth 4112 and the first inner ratchet tooth 1312 rotate synchronously at substantially the same rotational speed, no driving relationship exists between the first outer ratchet tooth 4112 and the first inner ratchet tooth 1312, and the first outer ratchet tooth 4112 and the first inner ratchet tooth 1312 rotate synchronously at substantially the same speed via their respective drives, thereby avoiding a collision between ratchet teeth and preventing the dynamic balance of the string trimmer head 10 from being broken.

When the drive shaft 4111 rotates along the second direction D2, if the portion of the string trimmer line 20 exposed out of the head housing 12 is insufficient to cut vegetation, the user knocks the bottom of the string trimmer head 10, that is, the knocking cap 1221 is knocked, the head housing 12 moves from the first axial position to the second axial position, and the first drive surface 1111 is displaced axially relative to the first mating surface 1211 to be disengaged. At this time, the power transmission path for rotation in the second direction D2 is broken between the spool 11 and the upper head housing 12, and the drive shaft 4111 still drives the head housing 12 to rotate along the second direction D2 via the second portion 132 of the clutch mechanism 13. However, the spool 11 rotates at a lower speed due to the loss of the drive force, the rotational speed of the head housing 12 along the second direction D2 is higher than the rotational speed of the spool 11 along the second direction D2, and the spool 11 rotates relative to the head housing 12 along the first direction D1, thereby releasing the string trimmer line 20 out of the head housing 12.

As shown in FIG. 17, when the main switch 425 of the string trimmer 100 is activated, the mode selection assembly 426 selects the winding mode, and the electric motor 411 is driven to rotate along the second direction D2. In this example, the rated rotational speed of the drive shaft 4111 in the winding mode is lower than the rated rotational speed of the drive shaft 4111 in the cutting mode. The drive shaft 4111 rotates along the second direction D2 at the rated rotational speed for winding, the third drive block 1341 is at the first position, the third inner ratchet tooth 1342 is engaged with the third outer ratchet tooth 4114, and the third outer ratchet tooth 4114 drives the third inner ratchet tooth 1342 so that the third drive block 1341 drives the spool 11 to rotate synchronously along the second direction D2. The locking portion 15 on the string trimmer head 10 locks at least one of the support plate 124, the upper head housing 12, or the lower head housing 12, the first drive surface 1111 of the first drive portion 111 and the first mating surface 1211 of the first mating portion 121 move away from each other, and the first inclined surface 1112 of the first drive portion 111 and the second inclined surface 1212 of the first mating portion 121 slide relative to each other so that the spool 11 moves relative to the head housing 12 along the second direction D2, and the string trimmer line 20 is wound onto the spool 11.

As another example of the present application, the string trimmer 100 does not have the winding mode driven by the electric motor 411, that is, when the string trimmer line 20 on the spool 11 is insufficient, manual winding is performed. Differences between a string trimmer 100 having no winding mode and the preceding string trimmer 100 are mainly described below.

In the features of the first example in hardware structure, the third portion 134 of the clutch mechanism 13 is mainly used for implementing the winding mode of the string trimmer 100, and the electric motor 411 drives the spool 11 or the head housing 12 to rotate to perform winding. The setting of the first position of the second portion 132 of the clutch mechanism 13 and the rotation starting process in the second cutting mode in which the drive shaft 4111 has the same rotation direction as in the winding mode are provided to adapt to the winding mode of the string trimmer 100, that is, the third portion 134 of the clutch mechanism.

When the string trimmer 100 has no winding mode, the clutch mechanism 13 is provided with only the first portion 131 between the drive shaft 4111 and the spool 11 and the second portion 132 between the drive shaft 4111 and the head housing 12, and the clutch mechanism 13 is not provided with the third portion 134.

When the second drive block of the second portion 132 of the clutch mechanism 13 is at the first position, that is, the initial position, the second inner ratchet tooth 1322 is engaged with the second outer ratchet tooth 4113. When the main switch 425 of the string trimmer 100 is activated, the mode selection assembly 426 selects the second cutting mode, and the drive shaft 4111 of the electric motor 411 rotates along the second direction D2. The second inner ratchet tooth 1322 is engaged with the second outer ratchet tooth 4113, the power of the drive shaft 4111 is output to the second portion 132 of the clutch mechanism 13, the second outer ratchet tooth 4113 drives the second inner ratchet tooth 1322 to rotate, the second drive block 1321 drives the support plate 124 to rotate along the second direction D2, and the support plate 124 drives, via the spline structure, the upper head housing 12 and the lower head housing 12 to rotate synchronously. The first mating portion 121 in the upper head housing 12 drives the first drive portion 111 on the spool 11, that is to say, the first mating surface 1211 drives the first drive surface 1111 so that the spool 11 rotates synchronously with the head housing 12. Thus, the power transmission path for rotation in the second direction D2 is built from the drive shaft 4111, through the second portion 132 of the clutch mechanism 13, the support plate 124, and the upper/lower head housing 12, to the spool 11.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A string trimmer, comprising:
a string trimmer head comprising a spool configured for a string trimmer line to be wound on and a head housing configured to accommodate at least part of the spool and formed with a threading hole for the string trimmer line to penetrate through; and
a drive device comprising a motor having a drive shaft configured to drive the string trimmer head to rotate to cut vegetation;
wherein the string trimmer has a first cutting mode and a second cutting mode; in the first cutting mode, the string trimmer head rotates along a first direction; in the second cutting mode, the string trimmer head rotates along a second direction; and the first direction is opposite to the second direction; and
in the first cutting mode, the drive shaft drives the spool to rotate, and the spool drives the head housing to rotate; in the second cutting mode, the drive shaft drives the head housing to rotate, and the head housing drives the spool to rotate.

2. The string trimmer according to claim 1, wherein the spool is formed with or connected to a first drive portion, and the head housing is formed with or connected to a first mating portion; when the string trimmer head rotates along the first direction, the first drive portion drives the first mating portion; and when the string trimmer head rotates along the second direction, the first mating portion drives the first drive portion.

3. The string trimmer according to claim 2, wherein the first drive portion comprises first meshing teeth each having a first drive surface, and the first mating portion comprises first mating teeth each having a first mating surface.

4. The string trimmer according to claim 3, wherein when the string trimmer head rotates along the first direction, the first drive surface drives the first mating surface; and when the string trimmer head rotates along the second direction, the first mating surface drives the first drive surface.

5. The string trimmer according to claim 3, wherein the first drive surface and the first mating surface are configured for vertical surface engagement.

6. The string trimmer according to claim 3, wherein when the head housing is at a first axial position relative to the spool, the first mating teeth mate with the first meshing teeth to enable the rotating spool to drive the head housing to rotate synchronously.

7. The string trimmer according to claim 6, wherein when the head housing is at a second axial position relative to the spool, the first mating teeth are displaced axially relative to the first meshing teeth to enable the spool to rotate relative to the head housing and release the string trimmer line.

8. The string trimmer according to claim 1, further comprising a clutch mechanism driven by the drive shaft, wherein the clutch mechanism is configured to selectively transmit power output from the drive shaft to at least one of the spool or the head housing according to a rotational state of the drive shaft.

9. The string trimmer according to claim 1, further comprising a mode selection assembly configured for a user to operate to select a rotation direction of the string trimmer head.
